# EUROPEAN PATENT SPECIFICATION

(11) **EP 4 411 145 B1**
(45) Date of publication and mention of the grant of the patent: **19.03.2025**
(21) Application number: 23174903.7
(22) Date of filing: 23.05.2023
(51) Int. Cl.: F04D 29/42, F04D 13/08, F04D 13/06

(54) **WATER PUMP WITH BUILT-IN BATTERY**
WASSERPUMPE MIT EINGEBAUTER BATTERIE
POMPE À EAU À BATTERIE INTÉGRÉE

(30) Priority: 31.01.2023 CN 202310047141
(43) Date of publication of application: 07.08.2024
(73) Proprietor: NINGBO JUNHE INTELLIGENT TECHNOLOGY CO., LTD., Ningbo Zhejiang 315599 (CN)
(72) Inventor: ZHANG, Junbo, Ningbo, 315599 (CN); YANG, Ke, Ningbo, 315599 (CN); CHEN, Wenda, Ningbo, 315599 (CN); ZHU, Kewei, Ningbo, 315599 (CN)
(74) Representative: Bayramoglu et al.

(56) References cited:
- WO-A1-2019/149390
- CH-A- 393 093
- CN-U- 216 714 736
- US-A- 3 015 281

## Description

### TECHNICAL FIELD

The present disclosure relates to the technical field of water pump structures, and in particular, to a water pump with a built-in battery.

### BACKGROUND

A water pump is a device that transports or pressurizes a liquid, and transmits the mechanical energy of a prime mover or other external energy to the liquid to increase the energy of the liquid. In addition to liquids such as water, oil, acid and alkali liquors, emulsions, suspoemulsions, and liquid metals, the water pump can also transport gas mixtures and liquids containing suspended solids.

Most of the existing water pumps are powered by external power supplies and built-in batteries. The external power supply usually requires connection of a power cord. Therefore, the water pumps have poor portability and a limited application scope. In this regard, the built-in battery is a better choice for the water pumps.

Chinese patent CN214331003U discloses a fixing structure for a lithium battery-powered submersible pump, including a housing and a base connected through screws. A motor is provided on one side in the housing, and an impeller is provided at a corresponding position in the base. A battery compartment is provided on the other side in the housing. A plurality of axial limiting ribs are circumferentially arranged on an inner wall of the battery compartment, two support plates at a certain interval are provided at a top of the battery compartment, and two opposite battery racks are provided inside the battery compartment. A certain number of batteries are mounted between the battery racks, and support pieces are respectively provided at upper ends of the battery racks. An opening is formed in the base located below the battery compartment, and a battery compartment cover is provided in the opening. An outer edge of an upper end of the battery compartment cover abuts against the limiting bars. A pressing ring is sleeved on an outer wall of the battery compartment cover. A sealing ring is provided between a top of the pressing ring and the battery compartment cover, and a plurality of screw holes are circumferentially arranged at a bottom of the pressing ring. The pressing ring and the base are connected through screws.

According to the water pump above, the opening of the battery compartment is formed below the battery compartment, and the battery compartment cover is disposed on the opening, such that when the submersible pump is in use, the weight of the batteries is concentrated on the battery compartment cover at the opening, and there is a risk of deformation and liquid infiltration into the battery compartment. US3015281A discloses a portable liquid pump. WO2019/149390A1 mentions rain protection for battery of a submersible pump. CN216714736U discloses a floating pump. CH393093A discloses a float type pump.

### SUMMARY

To solve the above problems in the prior art, the present disclosure provides a water pump with a built-in battery capable of preventing a liquid from penetrating into a battery compartment, such that a battery pack and an interface thereof in the battery compartment do not need to be additionally designed with waterproof performance, and the water pump is safer and lower in cost.

The present disclosure adopts the following technical solutions:
A water pump with a built-in battery, including a pump body, where
a battery compartment and a mounting cavity arranged in a horizontal direction and adjacent to each other are provided in the pump body;
a water inlet and a water outlet are further formed in the pump body;
a control panel is provided at an upper part of the mounting cavity;
a battery pack is detachably connected into the battery compartment, and an upper part of the battery compartment is detachably connected to a battery compartment cover;
a handle is provided on the battery compartment cover;
a motor is provided in the mounting cavity; and
the control panel is electrically connected to the battery pack and the motor.

A floating structure is connected to the pump body.

The floating structure includes a floating member and a hinge member, and the hinge member is configured to hinge the floating member to a side surface of the pump body.

The floating member includes a float and a housing that are in an integrated structure; and alternatively, the floating member includes a float and a housing that are in a split structure, where the float is connected into the housing; and
one side of the housing is connected to the hinge member, and the other opposite side of the housing is fastened to the pump body.

The hinge member includes a fixed member provided on the side surface of the pump body and a movable member connected to the housing;
a limiting grid plate is provided on the fixed member; the movable member includes a movable curved surface and a limiting plane;
the limiting plane and the limiting grid plate are matched with each other to limit a rotation angle of the housing; and
the rotation angle is 0-135 degrees.

The limiting grid plate and the limiting plane are interacted to limit the rotation angle of the floating member, to ensure a maximum contact area between the float and the liquid surface at this time, thereby ensuring a maximum buoyancy is provided to the water pump.

Preferably, a guide groove and a contact terminal are provided in the battery compartment;
a guide piece and an output groove are provided on the battery pack;
the guide piece is matched and slidably connected to the guide groove; and
the contact terminal is electrically connected to the output groove.

The battery pack is slidably connected and detachably mounted in the battery compartment through cooperation between the guide piece and the guide groove. Moreover, the battery pack is further electrically connected to the pump body through electric connection between the contact terminal and the output groove, thereby powering the pump body.

Preferably, the battery compartment cover is fastened to the battery compartment; and
a sealing ring is further sleeved on the battery compartment cover and configured to improve sealing performance between the battery compartment cover and the battery compartment.

The sealing ring is further configured to improve the sealing performance between the battery compartment and the battery compartment cover. When the water pump needs to be submerged, the water pump can also prevent, through the sealing ring, a liquid from penetrating into the battery compartment.

Preferably, the control panel includes a wireless module and is wirelessly connected to a remote controller through the wireless module.

The wireless module can achieve the remote control of the start and stop of the water pump or other functions.

Preferably, a connector is provided between the remote controller and the handle, and the remote controller is detachably connected to the handle through the connector.

When the remote controller is needed, the remote controller can be detached from the pump body for use; and when the remote controller is not needed, the remote controller can be stored and connected to the pump body to avoid missing.

Preferably, the connector is a magnetic adsorption member; and
the remote controller is adsorbed to the handle through the magnetic adsorption member.

Preferably, the connector includes a limiting groove; and
the limiting groove is formed in a side surface of the handle, and the remote controller is slidably connected and limited in the limiting groove.

Preferably, the water pump further includes a safety switch, where
the safety switch is disposed at a junction between the battery compartment cover and the battery compartment, and is configured to control on and off of a circuit between the battery pack and the control panel; and
the safety switch is in signal connection with the control panel, or is connected in series to the circuit between the control panel and the battery pack.

The safety switch can ensure that the water pump works only when the battery compartment cover is connected to the battery compartment, thereby further preventing the water pump from starting to work when the battery compartment and the battery compartment cover are not completely closed, resulting in burnout of the water pump due to a short circuit caused by liquid leakage in the battery compartment.

Preferably, the safety switch is a magnetic sensor;
the magnetic sensor is a Hall switch;
the Hall switch includes a Hall sensor and a sensing magnet;
the Hall sensor is disposed on the battery compartment, and the sensing magnet is disposed on the battery compartment cover; and
when the battery compartment is connected to the battery compartment cover, a horizontal projection of the Hall sensor and a horizontal projection of the sensing magnet are located at a same position.

Preferably, the battery pack is provided with a plurality of batteries, and the batteries are lithium batteries.

The lithium batteries have the advantages of high energy ratio, long service life, high power tolerance, light weight, and environmental protection.

Preferably, the pump body further includes an impeller and a diffusion chamber;
the water inlet is located at a bottom of the pump body;
the diffusion chamber is located inside the pump body and communicates the water inlet and the water outlet;
the motor is electrically connected to the control panel; and
the impeller is connected to an output shaft of the motor.

The present disclosure has the following beneficial effects:
the battery compartment cover of the pump body is disposed at the top of the battery compartment. When the water pump is in use, the junction between the battery compartment and the battery compartment cover is located the upper part of the pump body, and the battery pack does not exert a force on the battery compartment cover, thereby preventing the liquid from penetrating into the battery compartment. Accordingly, the water pump can use a general battery pack and a connector of the battery pack, and does not need to be additionally designed with waterproofness.

The handle is disposed on the battery compartment cover, it is convenient for a user to disassemble and mount the battery compartment cover through the handle, and it is also convenient for the user to lift and carry the water pump through the handle.

On the other hand, the control panel and the battery compartment cover are respectively disposed at the top end of the mounting cavity and the top end of the battery compartment, which can avoid positional conflicts between the handle and the control panel, such that the use is more convenient. Moreover, the cord length of the electrical connection between the control panel and the motor and between the battery compartment and the motor can also be shortened, thereby making the overall circuit structure more compact.

The floating structure can float the water pump on the liquid surface, thereby further preventing the liquid from leaking into the battery compartment, also preventing possible blocking of the water inlet because the water pump sinks to the bottom, and improving the liquid pumping efficiency.

### BRIEF DESCRIPTION OF THE DRAWINGS

The present disclosure will be further described in detail below with reference to the drawings and preferred embodiments. However, those skilled in the art should understand that these drawings are drawn only for the purpose of explaining the preferred embodiments, and therefore should not be construed as a limitation to the scope of the present disclosure. In addition, unless otherwise specified, the drawings are only intended to conceptually represent the composition or configuration of the described objects and may include exaggerated displays, and the drawings are not necessarily drawn to scale.
FIG. 1 is a schematic structural diagram of a water pump with a built-in battery provided in embodiments 1-5 of the present disclosure;
FIG. 2 is a schematic structural diagram of a float of a water pump with a built-in battery provided in embodiments 1-5 of the present disclosure in an unfolded state;
FIG. 3 is a schematic structural diagram of a battery compartment cover of a water pump with a built-in battery provided in embodiments 1-5 of the present disclosure in an open state;
FIG. 4 is a schematic structural diagram of an internal structure of a water pump with a built-in battery provided in embodiments 1-5 of the present disclosure;
FIG. 5 is a schematic structural diagram of a battery compartment of a water pump with a built-in battery provided in embodiments 1-5 of the present disclosure;
FIG. 6 is a schematic structural diagram of a remote controller and a handle of a water pump with a built-in battery provided in embodiments 1-5 of the present disclosure;
FIG. 7 is a schematic structural diagram of a remote controller and a handle of a water pump with a built-in battery provided in embodiments 6 and 7 of the present disclosure;
FIG. 8 is an exploded view of a remote controller and a handle of a water pump with a built-in battery provided in embodiments 6 and 7 of the present disclosure;
FIG. 9 is a schematic structural diagram of a float member of a water pump with a built-in battery provided in embodiment 7 of the present disclosure; and
FIG. 10 is an enlarged view of an area A in FIG. 4 of the present disclosure.

Reference numerals: 1. Pump body; 2. Battery compartment; 2a. Guide groove; 2b. Contact terminal; 3. Battery pack; 3a. Guide piece; 3b. Output groove; 3c. Lithium battery; 4. Battery compartment cover; 4a. Sealing ring; 5. Control panel; 6. Float; 6a. Expansion block; 7. Housing; 8. Handle; 8a. Limiting groove; 8b. Matching groove; 9. Remote controller; 9a. Magnet; 9b. Matching block; 10. Water inlet; 11. Water outlet; 12. Motor; 13. Impeller; 14. Diffusion chamber; 15. Mounting cavity; 16. Fastener; 17. Movable member; 17a. Movable curved surface; 17b. Limiting plane; 18. Fixed member; 18a. Limiting grid plate; 19. Hall element; 20. Sensing magnet; 21. Matching hole; and 22. Limiting hole.

### DETAILED DESCRIPTION OF THE EMBODIMENTS

In the description of the present disclosure, it should be noted that terms "central", "longitudinal", "transverse", "length", "width", "thickness", "upper", "lower", "front", "back", "left", "right", "vertical", "horizontal", "top", "bottom", "inner", "outer", "clockwise", and "anticlockwise", are used to indicate orientations or position relationships shown in accompanying drawings. It should be noted that these terms are merely intended to facilitate a simple description of the present disclosure, rather than to indicate or imply that the mentioned apparatus or elements must have the specific orientation or be constructed and operated in the specific orientation. Therefore, these terms may not be construed as a limitation to the present disclosure. In addition, the terms "first" and "second" are merely intended for a purpose of description, and shall not be understood as an indication or implication of relative importance or implicit indication of a quantity of indicated technical features. Therefore, the features defined by "first" and "second" can explicitly or implicitly include one or more features. In the description of the present disclosure, "a plurality of" means two or more, unless otherwise specifically defined.

In the description of the present disclosure, it should be noted that unless otherwise expressly specified, terms such as "mounted", "connected to", and "connected with" should be comprehended in a broad sense. For example, the "connection" may be a fixed connection, a removable connection, or an integral connection; may be a mechanical connection, an electrical connection, or mutual communication; may be a direct connection or an indirect connection via an intermediate medium; or may be an interconnection or an interaction relationship between two elements. Those of ordinary skill in the art may understand specific meanings of the above terms in the present disclosure based on a specific situation.

In the present disclosure, unless otherwise expressly specified, when it is described that a first feature is "above" or "under" a second feature, it may indicate that the first feature is in direct contact with the second feature, or that the first feature and the second feature are not in direct contact with each other but are in contact via another feature between them. In addition, that the first feature is "over", "above", and "on" the second feature includes that the first feature is directly above and diagonally above the second feature, or simply indicates that a horizontal height of the first feature is larger than that of the second feature. The case where the first feature is "beneath", "below", and "under" the second feature includes that the first feature is directly below and diagonally below the second feature, or simply indicates that the altitude of the first feature is lower than that of the second feature.

The following disclosure provides many different implementations or examples for implementing different structures of the present disclosure. In order to simplify the present disclosure, the components and settings of specific examples are described below. In addition, reference numerals and/or reference letters may be repeated in different examples in the present disclosure, and such repetition is for purposes of simplification and clarity and is not indicative of relationships between the implementations and/or settings discussed.

### Embodiment 1

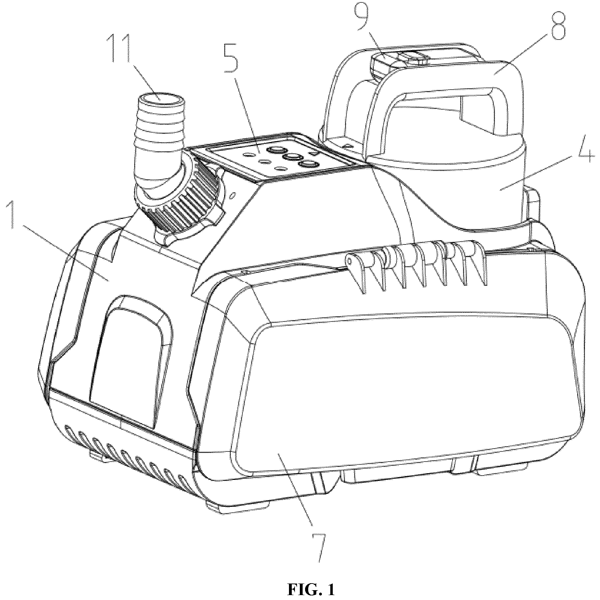

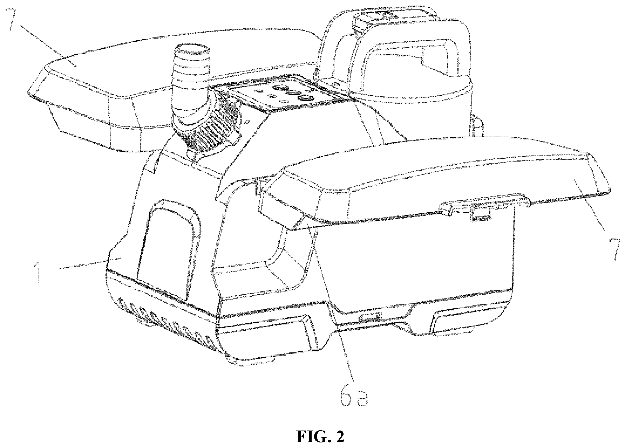

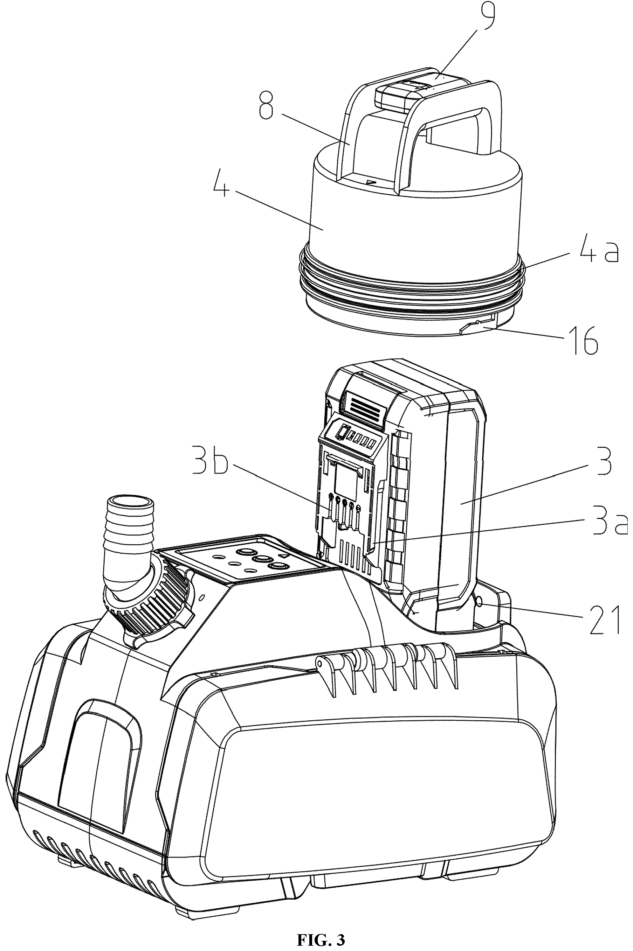

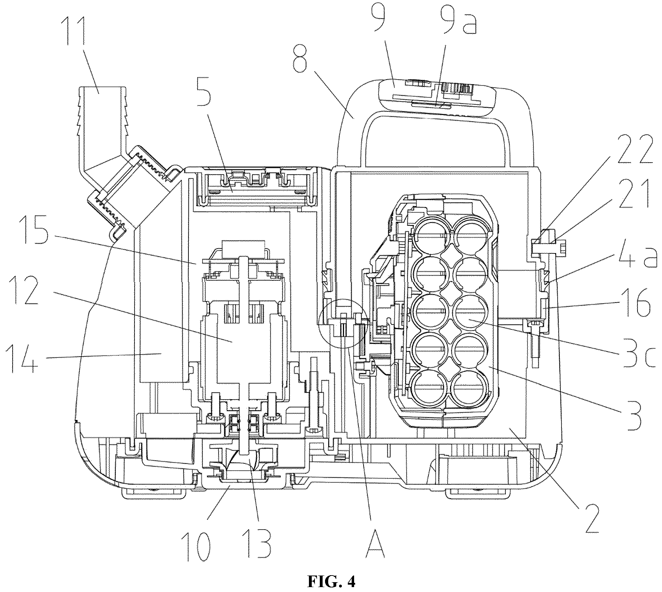

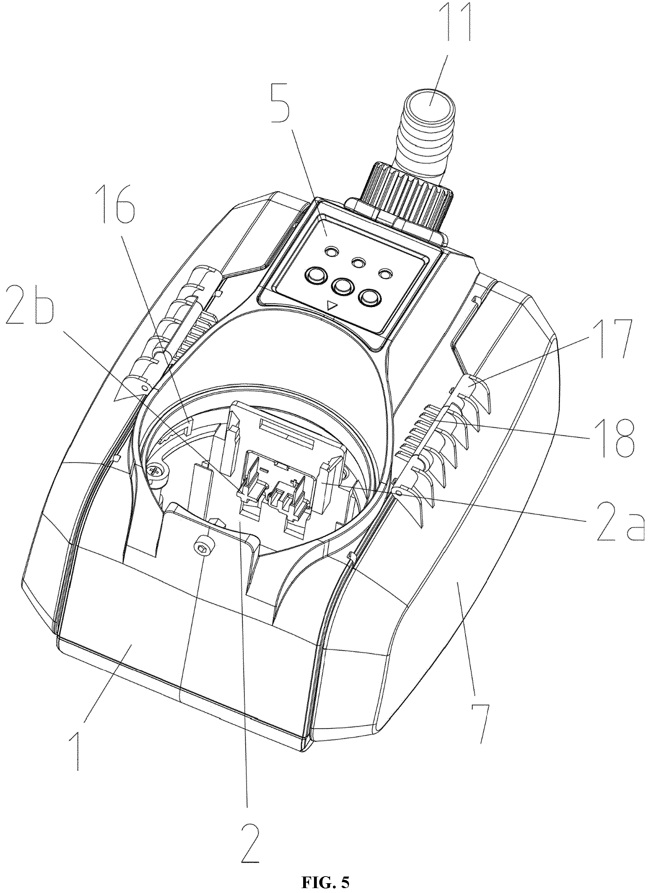

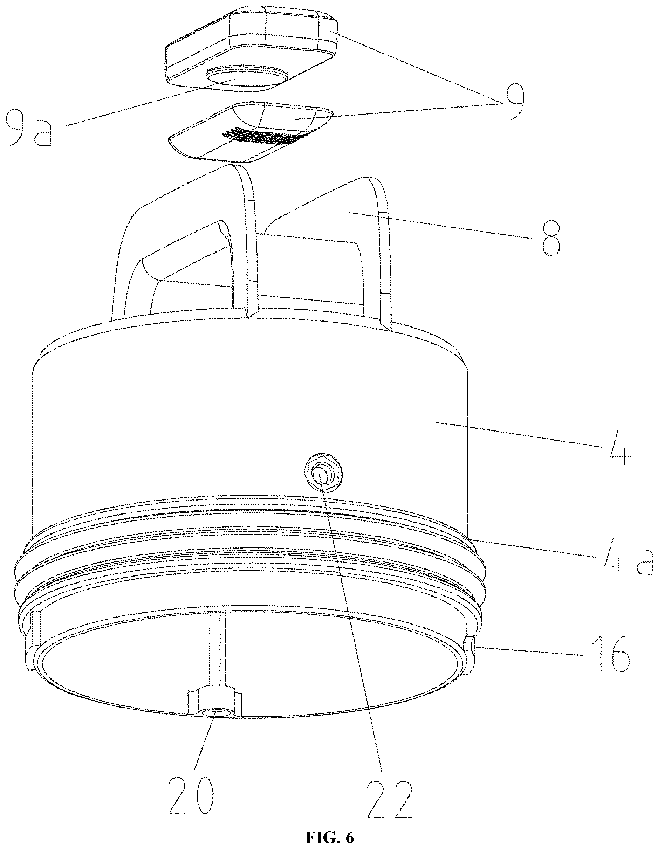

Please referring to FIG. 1 to FIG. 6, this embodiment provides a water pump with a built-in battery.

The water pump includes pump body 1. Battery compartment 2 and mounting cavity 15 are provided in the pump body 1, and are adjacent to each other but not communicated with each other. Motor 12 is mounted in the mounting cavity 15, and an output shaft of the motor 12 is connected to impeller 13. Water inlet 10 is formed in a bottom of the pump body 1, water outlet 11 is further formed in a top surface of the pump body 1, and a channel communicating the water inlet 10 and the water outlet 11 is further formed inside the pump body 1. The channel includes a pressurization area, diffusion chamber 14, and a conveying area connected in sequence. The pressurization area is communicated with the water inlet 10, the diffusion chamber 14 is located between the pressurization area and the conveying area, and the conveying area communicates the diffusion chamber 14 and the water outlet 11. The impeller 13 is located in the pressurization area. After entering the pressurization area through the water inlet 10, a liquid is pressurized under rotation of the impeller 13, is conveyed into the diffusion area for pressure release, reaches the water outlet 11 through the conveying area under the released pressure, and is finally discharged from the water outlet 11.

Battery pack 3 is detachably connected into the battery compartment 2. Specifically, eight lithium batteries 3c connected in series are provided in the battery pack 3. Two guide grooves 2a are vertically arranged in the battery compartment 2 along a compartment wall direction, and each include a notch. Openings of the notches of the two guide grooves 2a are oppositely arranged, and the two guide grooves 2a are in parallel. Two guide pieces 3a matched with the guide grooves 2a are also provided at corresponding positions on a side surface of the battery pack 3. The guide pieces 3a and the guide grooves 2a are matched to form a limited connection. Through the limited connection, the battery pack 3 can slide up and down in the battery compartment 2. When the battery pack 3 slides to the bottom, the battery pack 3 is completely connected to the battery compartment 2. When the battery pack 3 slides upward until the guide pieces 3a slide outside the guide grooves 2a, the battery pack 3 is removed from the battery compartment 2. Furthermore, contact terminal 2b is further provided between the two guide grooves 2a and made of a conductive metal. Correspondingly, output groove 3b is also formed between the two guide pieces 3a and provided with a contact chip. The contact chip is electrically connected to the lithium batteries 3c, and the lithium batteries 3c output, through the contact chip, power to other objects that are going to use the power. When the battery pack 3 slides to the bottom and is completely connected to the battery compartment 2, the contact terminal 2b is just inserted into the output groove 3b at this time and abuts against the contact chip in the output groove 3b, and at this time, control panel 5 is electrically connected to the battery pack 3 through the battery compartment 2.

An opening is formed in a top of the battery compartment 2 and configured to mount or take the battery pack 3 in or from the battery compartment 2. Preferably, battery compartment cover 4 is connected to the opening and is a cylinder structure. Two fasteners 16 are symmetrically arranged at equal intervals at the bottom end of the outer peripheral surface of the battery compartment cover 4, and two fasteners 16 are also provided at corresponding positions on the inner peripheral surface of the opening of the battery compartment 2. The fasteners 16 on the battery compartment 2 and the fasteners 16 on the battery compartment cover 4 are matched with each other and opposite to each other, and the battery compartment 2 is fastened to the battery compartment cover 4 through the fasteners 16. Furthermore, sealing ring 4a is further circumferentially sleeved on the outer peripheral surface of the battery compartment cover 4, and is configured to reinforce the sealing performance when the battery compartment 2 is connected to the battery compartment cover 4 and prevent an external liquid from entering the battery compartment 2.

Furthermore, the pump body 1 is provided with control panel 5. The control panel 5 is disposed on a top surface of the mounting cavity 15, and is electrically connected to the motor 12 and the contact terminal 2b of the battery compartment 2. The battery pack 3 powers the control panel 5 and the motor 12 through the battery compartment 2, and the control panel 5 controls on and off of the motor 12, thereby controlling on and off of the water pump.

### Embodiment 2

Referring to FIG. 1 to FIG. 6, the present disclosure provides another embodiment on the basis of the above embodiment.

Matching hole 21 is further formed in the pump body 1. The matching hole 21 is formed in the side of the pump body 1 distant from a water outlet hole, passes through the pump body 1, and extends into the battery compartment 2. Limiting hole 22 is formed in an outer surface of the battery compartment cover 4, the aperture of the limiting hole 22 is set to be equal to the aperture of the matching hole 21, and internal threads are respectively provided in the matching hole 21 and the limiting hole 22. When the battery compartment cover 4 is fastened to the battery compartment 2 through the fasteners 16, the matching hole 21 and the limiting hole 22 are matched in position. According to the water pump, a screw is mounted in the matching hole 21, and passes through the matching hole 21 to be threadedly connected into the limiting hole 22, thereby further fixing the battery compartment 2 and the battery compartment cover 4, avoiding looseness or positional deviations, and further avoiding the leakage of the liquid in the battery compartment 2.

### Embodiment 3

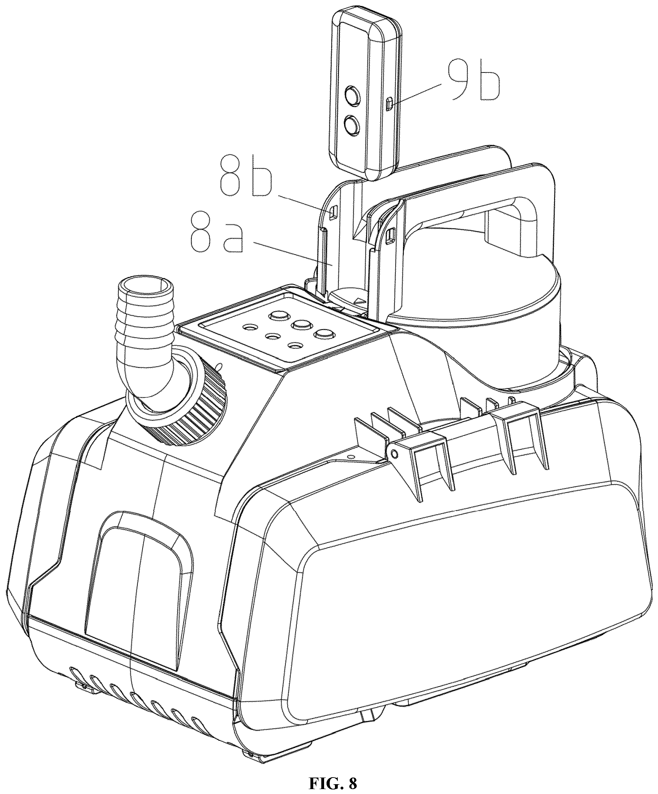

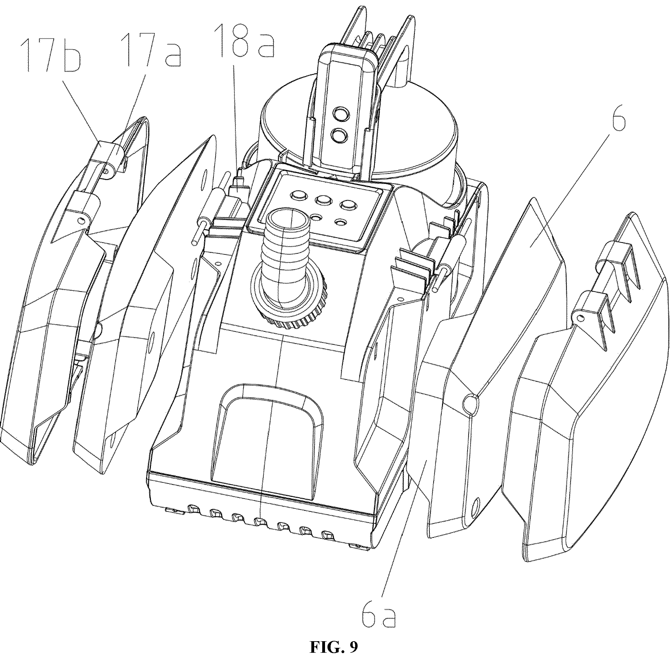

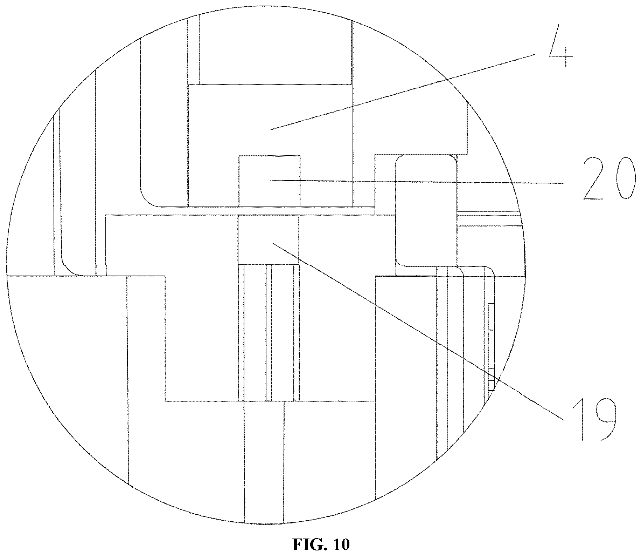

Referring to FIG. 1 to FIG. 10, the present disclosure provides another embodiment on the basis of the above embodiment.

A safety switch is further provided on the water pump with a built-in battery. The safety switch is disposed at a junction between the battery compartment cover 4 and the battery compartment 2, is electrically connected to the battery compartment 2, and is configured to turn on or off a circuit between the battery compartment 2 and the control panel 5.

Preferably, the safety switch is a magnetic sensor, and the magnetic sensor is a Hall switch. The Hall switch includes Hall sensor 19 and sensing magnet 20. The Hall sensor 19 is disposed in a wall of the battery compartment 2, is set to be close to the junction between the battery compartment cover 4 and the battery compartment 2, and is electrically connected to the control panel 5. The Hall sensor 19, the battery compartment 2, and the control panel 5 are connected in series. The Hall sensor 19 is configured to turn on or off the circuit between the battery compartment 2 and the control panel 5. The sensing magnet 20 is mounted in the battery compartment cover 4. Specifically, the sensing magnet 20 is set to be close to the junction between the battery compartment cover 4 and the battery compartment 2. When the battery compartment cover 4 is fastened to the battery compartment 2 through the fasteners 16, the Hall sensor 19 and the sensing magnet 20 are just opposite at this time, the Hall sensor 19 receives the action of the sensing magnet 20 to generate a potential difference, the battery compartment 2 and the control panel 5 are connected at this time, and the battery pack 3 powers the water pump through the battery compartment 2. When the battery compartment cover 4 is not completely fastened to the battery compartment 2, the Hall sensor 19 and the sensing magnet 20 are not matched in position, the Hall sensor 19 does not generate a potential difference at this time, the battery compartment 2 and the control panel 5 are not connected, and the battery pack 3 does not power the battery compartment 2 at this time.

Alternatively, the Hall switch can also be in signal connection with the control panel 5. When the battery compartment cover 4 is completely fastened to the battery compartment 2 through the fasteners 16, the Hall sensor 19 and the sensing magnet 20 are just opposite at this time, and the Hall switch outputs a connection signal to the control panel 5. After the control panel 5 receives the connection signal, the battery pack 3 is electrically connected to the control panel 5, such that the battery pack 3 powers the control panel 5 and the batteries. When the battery compartment cover 4 is not completely connected to the battery compartment 2, the Hall switch outputs a non-connection signal to the control panel 5. After the control panel 5 receives the non-connection signal, the electric connection between the battery pack 3 and the control panel 5 is cut off or maintained.

Preferably, the safety switch may also be a pressure switch. When the safety switch is a pressure switch, a pressing member is provided on the battery compartment cover 4, and a contact member is provided in the battery compartment 2. When the battery compartment cover 4 is connected to the battery compartment 2, the pressing member presses the contact member. At this time, the pressure switch transmits a signal to the control panel 5, and the control panel 5 controls that the circuit between the battery pack 3 and the control panel 5 is turned on. Alternatively, the battery pack 3, the pressure switch, and the control panel 5 are connected in series. When the pressure switch is turned on, the battery pack 3 is directly connected to the control panel 5.

Setting the structure of the safety switch can ensure that the water pump is powered on only when the battery compartment 2 is completely connected to the battery compartment cover 4, to avoid burnout of the water pump due to a short circuit caused by liquid leakage in the battery compartment 2.

### Embodiment 4

Referring to FIG. 1 to FIG. 6, the present disclosure provides another embodiment on the basis of the above embodiment.

This embodiment provides a floating structure applied to the water pump with a built-in battery described in any of the above embodiments.

Specifically, the floating structure includes floating members and a hinge member. Two floating members are provided on the pump body 1 and symmetrically arranged on opposite side surfaces of the pump body 1. Each floating member includes float 6 and housing 7. The float 6 may be a hollowed plastic block, or may be made of a floatable material. This embodiment does not define the material and structure of the float 6, and the float 6 in the present disclosure may be made of the floatable material in any prior art. The float 6 is fixed on the housing 7 by means of threaded connection. The housing 7 is hinged to a side surface of the pump body 1 by the hinge member. Preferably, the hinge member includes fixed member 18 and movable member 17. The fixed member 18 is fixedly connected to the side surface of the pump body 1, and the movable member 17 is mounted on a side of the housing 7. The side of the housing 7 is rotatably connected to the pump body 1 through the hinging between the movable member 17 and the fixed member 18; and through the hinging, the housing 7 can rotate on the pump body 1. A hook claw is provided on the opposite side of the housing 7, a hook groove is formed in a corresponding position of the pump body 1, and the hook claw and the hook groove are matched with each other and fastened. When the housing 7 is folded, the housing 7 and the pump body 1 are fixed through the fastening between the hook claw and the hook groove, and the float 6 is located between the housing 7 and the pump body 1. When the housing 7 is unfolded, the hook claw is separated from the hook groove, the housing 7 is rotated to the side surface of the pump body 1 through the hinging to be vertical, and at this time, the float 6 is located at the bottom end of the housing 7. In this state, when the water pump of the present disclosure is put in the liquid, the float 6 floats on the liquid surface, such that the pump body 1 floats on the liquid surface, and the opening of the battery compartment 2 is set to be higher than the liquid surface, thereby preventing the liquid from entering the battery compartment 2, and ensuring that the water inlet 10 at the bottom of the pump body 1 can sink into the liquid, without affecting the pumping function of the water pump.

Preferably, the housing 7 rotates on the pump body 1 through the hinge member at an angle of 0-135 degrees.

Furthermore, expansion block 6a is provided on the side of the float 6 close to the hinge member. The expansion block 6a is set as a plane protruding from the housing 7, and is configured to increase the volume of the float 6, thereby increasing the displacement of the float 6, and increasing the buoyancy that can be obtained by the water pump. Furthermore, a groove configured to accommodate the expansion block 6a is formed in the side surface of the pump body 1. The groove is formed in the side of the side surface of the pump body 1 close to the water outlet 11. By setting at this position, the volume of the groove and the expansion block 6a can be increased as much as possible without affecting the mounting space of the impeller 13.

Furthermore, the movable member 17 and the fixed member 18 are each composed of three parallel segments hinged to each other. The hinge structure can length and increase the contact area between the floating member and the pump body 1, thereby improving the connection stability of the floating member, and avoiding positional deviations thereof.

### Embodiment 5

Referring to FIG. 1 to FIG. 6, the present disclosure provides another embodiment on the basis of the above embodiment.

A wireless module is further provided in the control panel 5. The water pump further includes remote controller 9. The remote controller 9 is wirelessly connected to the control panel 5 through a wireless module. The remote controller 9 starts or stops the motor 12 by wirelessly connecting and remotely controlling the control panel 5, thereby controlling startup and stop of the water pump. This embodiment does not define the wireless connection mode, and any wireless connection and control mode existing in the prior art can be used in this implementation.

Handle 8 is further provided on the top surface of the battery compartment cover 4, and is made of a magnetic metal. Preferably, the handle 8 is made of heat-treated tempered martensitic stainless steel or anti-rust paint-coated metal iron, thereby ensuring good rust resistance while possessing a magnetic force. The handle 8 includes vertical plates provided on both sides and a chamber sunken between the vertical plates. A permanent magnet is mounted inside the remote controller 9. Preferably, the permanent magnet is magnet 9a. The remote controller 9 can be adsorbed into the sunken chamber of the handle 8 through the magnet 9a.

Preferably, the handle 8 is made of a plastic material or other non-magnetic materials. However, a ferromagnet is provided on the handle 8, and the remote controller 9 is adsorbed on the ferromagnet of the handle 8 through the magnet 9a.

Preferably, the handle 8 is made of a plastic material or other non-magnetic materials. However, magnet 9a is provided on the handle 8. The remote controller 9 is provided with a ferromagnet or includes a housing made of a magnetic metal. The remote controller 9 is adsorbed on the magnet 9a of the handle 8.

When remote wireless control for the water pump is needed, the remote controller 9 is removed from the handle 8. when the water pump needs to be stored, the remote controller 9 is magnetically adsorbed on the chamber of the handle 8 to avoid loss.

### Embodiment 6

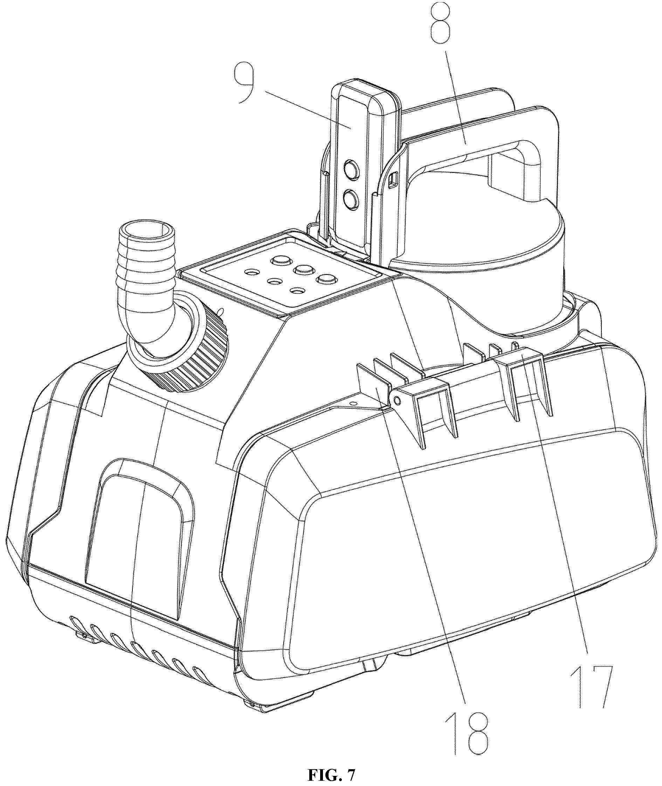

Referring to FIG. 7 to FIG. 9, the present disclosure provides another embodiment on the basis of the above embodiment.

The handle 8 includes vertical plates provided on both sides and a chamber sunken between the vertical plates. Limiting groove 8a is formed between the vertical plate vertically arranged close to a side of the control panel 5 and the chamber, and is configured to accommodate the remote controller 9. The remote controller 9 is slidably connected into the limiting groove 8a. Preferably, matching groove 8b is further formed in the vertical plate in which the limiting groove 8a is formed. Matching block 9b matched and connected to the matching groove 8b is provided on a side surface of the remote controller 9. Inclined surfaces are provided at both ends of the matching block 9b. When the remote controller 9 slides in the limiting groove 8a, and the matching block 9b is matched in the matching groove 8b through the inclined surfaces, the remote controller 9 is fixed to the limiting groove 8a. The inclined surfaces are convenient for the matching block 9b to match with or leave the matching groove 8b.

When remote wireless control for the water pump is needed, the remote controller 9 is slidably removed from the limiting groove 8a of the handle 8. when the water pump needs to be stored, the remote controller 9 is fixed in the limiting groove 8a through the cooperation between the matching block 9b and the matching groove 8b, thereby avoiding the loss of the remote controller 9.

### Embodiment 7

Referring to FIG. 7 to FIG. 9, the present disclosure provides another embodiment on the basis of the above embodiment.

Limiting grid plate 18a is provided on the fixed member 18, and includes a fitting surface in parallel to the side surface of the pump body 1 and in contact with the movable member 17. The movable member 17 includes movable curved surface 17a and limiting plane 17b adjacent to each other. When the floating member and the pump body 1 are closed, the movable curved surface 17a is in contact with the fitting surface of the limiting grid plate 18a at this time, and the limiting plane 17b is perpendicular to the side surface of the pump body 1. When the floating member is unfolded and rotates through the hinge member, the movable curved surface 17a and the fitting surface of the limiting grid plate 18a are in contact and rotate, and as the rotation angle increases, the limiting plane 17b and the pump body 1 also tend to be parallel. When the rotation angle is 90 degrees, the movable curved surface 17a is separated from the fitting surface of the limiting grid plate 18a at this time, and the limiting plane 17b abuts against the fitting surface of the limiting grid plate 18a. Moreover, under the cooperation between the limiting plane 17b and the limiting grid plate 18a, the floating member reaches the limit of the rotation angle, and at this time, a plane where the float 6 is located is just perpendicular to the side surface of the pump body 1. When the water pump in this state is in use, the bottom surface of the float 6 is just completely fitted and in contact with the liquid surface, thereby ensuring that the float 6 floats on the liquid surface with the maximum area, such that the water pump possesses the maximum buoyancy.

Preferably, considering the wear between the fixed member 18 and the movable member 17, the angle of the floating member rotating on the pump body 1 through the hinge member ranges from 0 degree to 135 degrees.

### Embodiment 8

Referring to FIG. 1 to FIG. 9, the present disclosure provides another embodiment on the basis of the above embodiment.

The water pump with a built-in battery further includes a controller electrically connected to the control panel 5. Meanwhile, the battery pack 3 is electrically connected to the controller, and the motor 12 is electrically connected to the controller.

In conclusion, the battery pack 3 is electrically connected to the control panel 5 through the controller, and the motor 12 is electrically connected to the control panel 5 through the controller.

This embodiment provides a solution. In the solution, the controller is disposed in the mounting cavity and split from the control panel 5. A plurality of control buttons are provided on the control panel 5. When the buttons on the control panel 5 are pressed down, or the wireless module in the control panel 5 receives the signal of the remote controller 9, the control panel 5 outputs the signal to the controller, and the controller controls startup or stop of the motor 12 or performs a corresponding working behavior.

This embodiment provides another solution. In the solution, the controller and the control panel 5 are integrally arranged, the controller is mounted inside the control panel 5, and the controller is a control module. A plurality of control buttons are provided on the control panel 5. When the buttons on the control panel 5 are pressed down, or the wireless module in the control panel 5 receives the signal of the remote controller 9, the control panel 5 outputs the signal to the control module, and the control module controls startup or stop of the motor 12 or performs a corresponding working behavior.

The above embodiments can be randomly combined.

The present application is described in detail above. Specific cases are used herein to illustrate the principle and implementation of the present application, and the description of the above embodiments is only intended to help understand the core idea of the present application. It should be noted that several improvements and modifications may also be made by those of ordinary skill in the art without departing from the principles of the present disclosure. The scope of protection of the present invention is defined by the following claims.

## Claims

1. A water pump with a built-in battery, comprising a pump body (1), wherein
a battery compartment (2) and a mounting cavity (15) arranged in a horizontal direction and adjacent to each other are provided in the pump body (1);
a water inlet (10) and a water outlet (11) are further formed in the pump body (1);
a control panel (5) is provided at an upper part of the mounting cavity (15);
a battery pack (3) is detachably connected into the battery compartment (2), and an upper part of the battery compartment (2) is detachably connected to a battery compartment cover (4);
a handle (8) is provided on the battery compartment cover (4);
a motor (12) is provided in the mounting cavity (15); and
the control panel (5) is electrically connected to the battery pack (3) and the motor (12); **characterized in that**
a floating structure is further connected to the pump body (1); the floating structure comprises a floating member and a hinge member, and the hinge member is configured to hinge the floating member to a side surface of the pump body (1), wherein
the floating member comprises a float (6) and a housing (7) that are in an integrated structure; and alternatively, the floating member comprises a float (6) and a housing (7) that are in a split structure, wherein the float (6) is connected into the housing (7); and
one side of the housing (7) is connected to the hinge member, and the other opposite side of the housing (7) is fastened to the pump body (1);
the hinge member comprises a fixed member (18) provided on the side surface of the pump body (1) and a movable member (17) connected to the housing (7);
a limiting grid plate (18a) is provided on the fixed member (18); and the movable member (17) comprises a movable curved surface (17a) and a limiting plane (17b);
the limiting plane (17b) and the limiting grid plate (18a) are matched with each other to limit a rotation angle of the housing (7); and
the rotation angle is 0-135 degrees.

2. The water pump with the built-in battery according to claim 1, **characterized in that** the battery compartment cover (4) is fastened to the battery compartment (2); and
a sealing ring (4a) is further sleeved on the battery compartment cover (4), and the sealing ring (4a) is configured to improve sealing performance between the battery compartment cover (4) and the battery compartment (2).

3. The water pump with the built-in battery according to claim 1, **characterized in that** a guide groove (2a) and a contact terminal (2b) are provided in the battery compartment (2);
a guide piece (3a) and an output groove (3b) are provided on the battery pack (3);
the guide piece (3a) is matched and slidably connected to the guide groove (2a); and
the contact terminal (2b) is electrically connected to the output groove (3b).

4. The water pump with the built-in battery according to claim 1, **characterized in that** the control panel (5) comprises a wireless module, and the control panel (5) is wirelessly connected to a remote controller (9) through the wireless module.

5. The water pump with the built-in battery according to claim 4, **characterized in that** a connector is provided between the remote controller (9) and the handle (8), and the remote controller (9) is detachably connected to the handle (8) through the connector.

6. The water pump with the built-in battery according to claim 5, **characterized in that** the connector is a magnetic adsorption member; and the remote controller (9) is adsorbed to the handle (8) through the magnetic adsorption member.

7. The water pump with the built-in battery according to claim 5, **characterized in that** the connector comprises a limiting groove (8a); and
the limiting groove (8a) is formed in a side surface of the handle (8), and the remote controller (9) is slidably connected and limited in the limiting groove (8a).

8. The water pump with the built-in battery according to claim 1, **characterized by** further comprising a safety switch, wherein
the safety switch is disposed at a junction between the battery compartment cover (4) and the battery compartment (2), and the safety switch is configured to control on and off of a circuit between the battery pack (3) and the control panel (5); and
the safety switch is in signal connection with the control panel (5), or the safety switch is connected in series to the circuit between the control panel (5) and the battery pack (3).

9. The water pump with the built-in battery according to claim 8, **characterized in that** the safety switch is a magnetic sensor;
the magnetic sensor is a Hall switch;
the Hall switch comprises a Hall sensor and a sensing magnet (20);
the Hall sensor is disposed on the battery compartment (2), and the sensing magnet (20) is disposed on the battery compartment cover (4); and
when the battery compartment (2) is connected to the battery compartment cover (4), a horizontal projection of the Hall sensor and a horizontal projection of the sensing magnet (20) are located at a same position.

10. The water pump with the built-in battery according to claim 1, **characterized in that** the pump body (1) further comprises an impeller (13) and a diffusion chamber (14);
the water inlet (10) is located at a bottom of the pump body (1);
the diffusion chamber (14) is located inside the pump body (1) and communicates the water inlet (10) and the water outlet (11);
the motor (12) is electrically connected to the control panel (5); and
the impeller (13) is connected to an output shaft of the motor (12).

11. The water pump with the built-in battery according to claim 1, **characterized in that** the battery pack (3) comprises a plurality of lithium batteries (3c).

## Patentansprüche

1. Wasserpumpe mit der eingebauten Batterie, umfassend einen Pumpenkörper (1), wobei ein Batteriefach (2) und ein Montagehohlraum (15) in einer horizontalen Richtung und angrenzend aneinander angeordnet im Pumpenkörper (1) bereitgestellt sind;
ein Wassereinlass (10) und ein Wasserauslass (11) zudem im Pumpenkörper (1) ausgebildet sind;
ein Bedienfeld (5) an einem oberen Teil des Montagehohlraums (15) bereitgestellt ist;
ein Batteriepack (3) abnehmbar im Batteriefach (2) angeschlossen ist und ein oberer Teil des Batteriefachs (2) abnehmbar mit einer Batteriefachabdeckung (4) verbunden ist;
ein Griff (8) auf der Batteriefachabdeckung (4) bereitgestellt ist;
ein Motor (12) im Montagehohlraum (15) bereitgestellt ist und
das Bedienfeld (5) elektrisch mit dem Batteriepack (3) und dem Motor (12) verbunden ist, **dadurch gekennzeichnet, dass**
zudem eine schwimmende Struktur mit dem Pumpenkörper (1) verbunden ist, die schwimmende Struktur ein schwimmendes Element und ein Gelenkelement umfasst und das Gelenkelement dazu ausgelegt ist, das schwimmende Element gelenkig mit einer Seitenoberfläche des Pumpenkörpers (1) zu verbinden, wobei
das schwimmende Element einen Schwimmer (6) und ein Gehäuse (7) umfasst, die in einer integrierten Struktur ausgebildet sind, und das schwimmende Element alternativ einen Schwimmer (6) und ein Gehäuse (7) umfasst, die in einer geteilten Struktur ausgebildet sind, wobei der Schwimmer (6) im Gehäuse (7) angeschlossen ist und
eine Seite des Gehäuses (7) mit dem Gelenkelement verbunden ist und die andere gegenüberliegende Seite des Gehäuses (7) am Pumpenkörper (1) befestigt ist;
das Gelenkelement ein fixiertes Element (18) umfasst, das auf der Seitenoberfläche des Pumpenkörpers (1) bereitgestellt ist, und ein bewegbares Element (17), das mit dem Gehäuse (7) verbunden ist;
eine Begrenzungsrasterplatte (18a) auf dem fixierten Element (18) bereitgestellt ist und das bewegbare Element (17) eine bewegbare gekrümmte Oberfläche (17a) und eine Begrenzungsebene (17b) umfasst;
die Begrenzungsebene (17b) und die Begrenzungsrasterplatte (18a) passend zueinander ausgebildet sind, um einen Drehwinkel des Gehäuses (7) zu begrenzen, und
der Drehwinkel 0-135 Grad beträgt.

2. Wasserpumpe mit der eingebauten Batterie nach Anspruch 1, **dadurch gekennzeichnet, dass** die Batteriefachabdeckung (4) am Batteriefach (2) befestigt ist und
zudem ein Dichtungsring (4a) auf der Batteriefachabdeckung (4) aufgezogen ist und der Dichtungsring (4a) dazu ausgelegt ist, die Dichtungsleistung zwischen der Batteriefachabdeckung (4) und dem Batteriefach (2) zu verbessern.

3. Wasserpumpe mit der eingebauten Batterie nach Anspruch 1, **dadurch gekennzeichnet, dass** eine Führungsnut (2a) und ein Kontaktanschluss (2b) im Batteriefach (2) bereitgestellt sind;
ein Führungsstück (3a) und eine Ausgangsnut (3b) auf dem Batteriepack (3) bereitgestellt sind;
das Führungsstück (3a) passend zur Führungsnut (2a) ausgebildet und mit dieser verschiebbar verbunden ist und der Kontaktanschluss (2b) elektrisch mit der Ausgangsnut (3b) verbunden ist.

4. Wasserpumpe mit der eingebauten Batterie nach Anspruch 1, **dadurch gekennzeichnet, dass** das Bedienfeld (5) ein Drahtlosmodul umfasst und das Bedienfeld (5) durch das Drahtlosmodul drahtlos mit einer Fernsteuerung (9) verbunden ist.

5. Wasserpumpe mit der eingebauten Batterie nach Anspruch 4, **dadurch gekennzeichnet, dass** eine Steckverbindung zwischen der Fernsteuerung (9) und dem Griff (8) bereitgestellt ist und die Fernsteuerung (9) durch die Steckverbindung abnehmbar mit dem Griff (8) verbunden ist.

6. Wasserpumpe mit der eingebauten Batterie nach Anspruch 5, **dadurch gekennzeichnet, dass** die Steckverbindung ein magnetisches Adsorptionselement ist und die Fernsteuerung (9) durch das magnetische Adsorptionselement zum Griff (8) adsorbiert wird.

7. Wasserpumpe mit der eingebauten Batterie nach Anspruch 5, **dadurch gekennzeichnet, dass** die Steckverbindung eine Begrenzungsnut (8a) umfasst und
die Begrenzungsnut (8a) in einer Seitenoberfläche des Griffs (8) ausgebildet ist und die Fernsteuerung (9) verschiebbar in der Begrenzungsnut (8a) angeschlossen und begrenzt ist.

8. Wasserpumpe mit der eingebauten Batterie nach Anspruch 1, **dadurch gekennzeichnet, dass** sie zudem einen Sicherheitsschalter umfasst, wobei
der Sicherheitsschalter an einer Verbindungsstelle zwischen der Batteriefachabdeckung (4) und dem Batteriefach (2) angeordnet ist und der Sicherheitsschalter dazu ausgelegt ist, einen Kreislauf zwischen dem Batteriepack (3) und dem Bedienfeld (5) so zu steuern, dass er ein- und ausgeschaltet wird, und
der Sicherheitsschalter in Signalverbindung mit dem Bedienfeld (5) steht oder der Sicherheitsschalter in Reihe mit dem Kreislauf zwischen dem Bedienfeld (5) und dem Batteriepack (3) geschaltet ist.

9. Wasserpumpe mit der eingebauten Batterie nach Anspruch 8, **dadurch gekennzeichnet, dass** der Sicherheitsschalter ein Magnetsensor ist;
der Magnetsensor ein Hall-Schalter ist;
der Hall-Schalter einen Hall-Sensor und einen Fühlermagnet (20) umfasst;
der Hall-Sensor auf dem Batteriefach (2) angeordnet ist und der Fühlermagnet (20) auf der Batteriefachabdeckung (4) angeordnet und
eine horizontale Projektion des Hall-Sensors und eine horizontale Projektion des Fühlermagnets (20) an einer selben Position befindlich sind, wenn das Batteriefach (2) mit der Batteriefachabdeckung (4) verbunden ist.

10. Wasserpumpe mit der eingebauten Batterie nach Anspruch 1, **dadurch gekennzeichnet, dass** der Pumpenkörper (1) zudem ein Laufrad (13) und eine Diffusionskammer (14) umfasst;
der Wassereinlass (10) an einem Boden des Pumpenkörpers (1) befindlich ist;
die Diffusionskammer (14) innerhalb des Pumpenkörpers (1) befindlich ist und den Wassereinlass (10) und den Wasserauslass (11) in Kommunikation setzt;
der Motor (12) elektrisch mit dem Bedienfeld (5) verbunden ist und das Laufrad (13) mit einer Ausgangswelle des Motors (12) verbunden ist.

11. Wasserpumpe mit der eingebauten Batterie nach Anspruch 1, **dadurch gekennzeichnet, dass** das Batteriepack (3) eine Vielzahl von Lithiumbatterien (3c) umfasst.

## Revendications

1. Pompe à eau présentant une batterie intégrée, comprenant un corps de pompe (1), dans laquelle
un compartiment de batterie (2) et une cavité de montage (15) disposés dans une direction horizontale et adjacents l'un à l'autre sont fournis dans le corps de pompe (1) ;
une entrée d'eau (10) et une sortie d'eau (11) sont en outre formés dans le corps de pompe (1) ;
un panneau de contrôle (5) est fourni sur une partie supérieure de la cavité de montage (15) ;
un bloc de batterie (3) est connecté de manière détachable dans le compartiment de batterie (2), et une partie supérieure du compartiment de batterie (2) est connecté de manière détachable au couvercle de compartiment de batterie (4) ;
une poignée (8) est fournie sur le couvercle de compartiment de batterie (4) ;
un moteur (12) est fourni dans la cavité de montage (15) ; et
le panneau de contrôle (5) est connecté électriquement au bloc de batterie (3) et au moteur (12) ; **caractérisée en ce que**
une structure flottante est connectée en outre au corps de pompe (1) ; la structure flottante comprend un élément flottant et un élément de charnière, et l'élément de charnière est conçu pour articuler l'élément flottant à une surface latérale du corps de pompe (1),
l'élément flottant comprenant un flotteur (6) et un boîtier (7) qui sont dans une structure intégrée ; et en alternative l'élément flottant comprenant un flotteur (6) et un boîtier (7) qui sont dans une structure divisée, le flotteur (6) étant connecté au boîtier (7) ; et
un côté du boîtier (7) étant connecté à l'élément de charnière, et l'autre côté opposé du boîtier (7) étant fixé au corps de pompe (1) ;
l'élément de charnière comprend un élément fixé (18) fourni sur la surface latérale du corps de pompe (1) et un élément mobile (17) connecté au boîtier (7) ;
une plaque de grille limitative (18a) est fournie sur l'élément fixé (18) ; et l'élément mobile (17) comprend une surface courbée mobile (17a) et un plan limitatif (17b) ;
le plan limitatif (17b) et la plaque de grille limitative (18a) sont assortis l'un à l'autre pour limiter l'angle de rotation du boîtier (7) ; et
l'angle de rotation est de 0 à 135 degrés.

2. Pompe à eau comprenant la batterie intégrée selon la revendication 1, **caractérisée en ce que** le couvercle de compartiment de batterie (4) est fixé au compartiment de batterie (2) ; et
une bague d'étanchéité (4a) est en outre emmanchée sur le couvercle de compartiment de batterie (4), et la bague d'étanchéité (4a) est conçue pour améliorer la performance d'étanchéité entre le couvercle de compartiment de batterie (4) et le compartiment de batterie (2).

3. Pompe à eau comprenant la batterie intégrée selon la revendication 1, **caractérisée en ce qu'**une rainure de guidage (2a) et une borne de contact (2b) sont fournies dans le compartiment de batterie (2) ;
une pièce de guidage (3a) et une rainure de sortie (3b) sont fournies sur le bloc de batterie (3) ;
la pièce de guidage (3a) est assortie et connectée de manière coulissante à la rainure de guidage (2a) ; et la borne de contact (2b) est connectée électriquement à la rainure de sortie (3b).

4. Pompe à eau comprenant la batterie intégrée selon la revendication 1, **caractérisée en ce que** le panneau de contrôle (5) comprend un module sans fil, et le panneau de contrôle (5) est connecté sans fil à un contrôleur à distance (9) à travers le module sans fil.

5. Pompe à eau comprenant la batterie intégrée selon la revendication 4, **caractérisée en ce qu'**un connecteur est fourni entre le contrôleur à distance (9) et la poignée (8), et le contrôleur à distance (9) est connecté de manière détachable à la poignée (8) à travers le connecteur.

6. Pompe à eau comprenant la batterie intégrée selon la revendication 5, **caractérisée en ce que** le connecteur est un élément d'adsorption magnétique ; et le contrôleur à distance (9) est adsorbé à la poignée (8) à travers l'élément d'adsorption magnétique.

7. Pompe à eau comprenant la batterie intégrée selon la revendication 5, **caractérisée en ce que** le connecteur comprend une rainure limitative (8a) ; et
la rainure limitative (8a) est formée dans une surface latérale de la poignée (8), et le contrôleur à distance (9) est connecté de manière coulissante et limité dans la rainure limitative (8a).

8. Pompe à eau comprenant la batterie intégrée selon la revendication 1, caractérisée en comprenant en outre un interrupteur de sécurité,
l'interrupteur de sécurité étant disposé au niveau d'une jonction entre le couvercle de compartiment de batterie (4) et le compartiment de batterie (2), et l'interrupteur de sécurité étant conçu pour contrôler l'activation et la désactivation d'un circuit entre le bloc de batterie (3) et le panneau de contrôle (5) ; et
l'interrupteur de sécurité étant un connexion de signaux avec le panneau de contrôle (5), ou l'interrupteur de sécurité étant connecté en série au circuit entre le panneau de contrôle (5) et le bloc de batterie (3).

9. Pompe à eau comprenant la batterie intégrée selon la revendication 8, **caractérisée en ce que** l'interrupteur de sécurité est un capteur magnétique ;
le capteur magnétique est un interrupteur à effet Hall ;
l'interrupteur à effet Hall comprend un capteur à effet Hall et un aimant de détection (20) ; le capteur à effet Hall est disposé sur le compartiment de batterie (2), et l'aimant de détection (20) est disposé sur le couvercle de compartiment de batterie (4) ; et
lorsque le compartiment de batterie (2) est connecté au couvercle de compartiment de batterie (4), une projection horizontale du capteur à effet Hall et une projection horizontale de l'aimant de détection (20) sont situées dans une même position.

10. Pompe à eau comprenant la batterie intégrée selon la revendication 1, **caractérisée en ce que** le corps de pompe (1) comprend en outre une roue à ailettes tournantes (13) et une chambre de diffusion (14) ;
l'entrée d'eau (10) est située en bas du corps de pompe (1) ;
la chambre de diffusion (14) est située à l'intérieur du corps de pompe (1) et met en communication l'entrée d'eau (10) et la sortie d'eau (11) ;
le moteur (12) est connecté électriquement au panneau de contrôle (5) ; et la roue à ailettes tournantes (13) est connectée à un arbre de sortie du moteur (12).

11. Pompe à eau comprenant la batterie intégrée selon la revendication 1, **caractérisée en ce que** le bloc de batterie (3) comprend une pluralité de batteries au lithium (3c).
